# EUROPEAN PATENT SPECIFICATION

(11) **EP 1 407 671 B1**
(45) Date of publication and mention of the grant of the patent: **07.06.2006**
(21) Application number: 03255692.0
(22) Date of filing: 11.09.2003
(51) Int. Cl.: A23B 7/04

(54) **Freezing vegetables**
Einfrieren von Gemüse
Congélation de légumes

(30) Priority: 08.10.2002 GB 0223339
(43) Date of publication of application: 14.04.2004
(73) Proprietor: UNILEVER PLC, London EC4P 4BQ (GB); UNILEVER N.V., 3013 AL Rotterdam (NL)
(72) Inventor: Ormerod, Andrew Paul, Sharnbrook, Bedford MK44 1LQ (GB); Ralfs, Julie Debra, Walton-on-Thames, Surrey KT12 1NT (GB); Sidebottom, Christopher Michael, Sharnbrook, Bedford MK44 1LQ (GB)
(74) Representative: Acham, Nicholas Clive

(56) References cited:
- EP-A- 1 249 171
- GB-A- 1 083 817
- US-A- 3 136 642
- US-A- 5 607 712
- US-A- 6 096 361
- SEOW C.: "Production of firmer-textured canned and frozen tropical fruit and vegetables" ASEAN FOOD JOURNAL, vol. 6, no. 3, 1991, pages 104-108, XP008026305
- PATENT ABSTRACTS OF JAPAN vol. 2002, no. 11, 6 November 2002 (2002-11-06) -& JP 2002 209545 A (HOUSE FOODS CORP), 30 July 2002 (2002-07-30)
- PATENT ABSTRACTS OF JAPAN vol. 1996, no. 10, 31 October 1996 (1996-10-31) -& JP 08 140570 A (SHOWA SANGYO CO LTD), 4 June 1996 (1996-06-04)
- PATENT ABSTRACTS OF JAPAN vol. 2000, no. 12, 3 January 2001 (2001-01-03) -& JP 2000 253812 A (HOUSE FOODS CORP), 19 September 2000 (2000-09-19)

## Description

### Field of the invention

The invention relates to a process for freezing vegetables and the frozen vegetables provided thereby. More particularly the invention relates to a freezing process which provides frozen vegetables of excellent quality when defrosted for consumption.

### Background to the invention

Various attempts have been in the art to improve the quality of vegetables which have been stored frozen by way of the freezing process applied.

In addition, attempts have been made to improve the quality by varying the process applied before freezing. In particular, the addition of calcium and/or the use of low temperature heating (i.e. to a temperature in the range 50 to 70°C) prior to freezing is known to increase the firmness retention during subsequent cooking of frozen vegetables (see, for example, C.C. Seow *et al*, ASEAN Food Journal, 1991, 6(3), 104-108; US 5,607,712 A; US 3,136,642 A; JP 2002209545 A; GB 1,083,817 A; JP 08140570 A; and JP 2000253812 A).

US patent 3,736,154 describes a process of ultraslow freezing which discloses the maintenance of intact cell membranes in the product by way of a freezing regime with a cooling rate of about 0.1 to 0.3°C per hour. This process is disclosed as achieving dehydration of the inner cell as water within the cell moves outside the cell membrane where it freezes without the destruction of the cell membrane.

Unfortunately this process if not a viable approach to the commercial preparation of frozen vegetables. Not only does this process not tolerate a blanching step which is necessary as a microbiological and enzyme deactivation step in modern vegetable processing, but also this process takes several days to complete.

US 6 096 361 discloses a similar method of preservation wherein food is relatively rapidly cooled from room temperature to close to the freezing point and then slowly cooled at a gradual cooling rate of 0.01 to 0.5°C/hour to below the freezing point. This non-frozen preservation method may be then followed by a rapid freezing treatment to achieve a food wherein the outer cells of the food are frozen and the inner cell preserved in a non-frozen state. It is disclosed that free water moves from the intracellular fluid to the extra cellular fluid, resulting in the simultaneous dilution of the extra cellular fluid and concentration of the intracellular fluid, which makes it easier for the extra cellular fluid to freeze and, conversely, more difficult for the intracellular fluid to freeze.

An alternative freezing process of the prior art for improving frozen vegetable quality is described in European Patent 0 554 468 B1 in which potatoes are cooked and frozen. Freezing is described as a 2 step process wherein, in a initial step, the core of the potatoes is kept at the crystallisation stage of water for a period of 15 to 60 minutes. In a second step deep-freezing is continued until a storage temperature of -20°C.

Our European Patent Application No. 02251681 discloses a process for the production of a frozen vegetable or part thereof, wherein said process comprises the steps:
(i) heat treating a vegetable or part thereof;
(ii) under-cooling to a maximum core temperature of less than or equal to -5°C;
(iii) reducing the core temperature to less than or equal to -18°C;

The process produces a frozen vegetable or part thereof comprising a core ice content, in which at least 40% of said core ice content is located within a plurality of cellular structures, wherein the perimeter of each cellular structure is defined by a cell wall. The freezing process can practically eliminate ice formation outside the cell wall of the vegetable tissue and so provide a texture, appearance and thus product quality that was not previously possible in frozen vegetables.

Under-cooling refers to the reduction of the temperature of the vegetable or part thereof to a temperature below the freezing point (i.e. the temperature at which freezing is possible) without the formation of ice crystals occurring.

The core refers to that part of the vegetable or part thereof which is at least 5mm from the external air contact surface. Preferably the core refers to that part of the vegetable or part thereof which is at least 10mm from the external air contact surface, most preferably at least 15mm therefrom.

Extra-cellular ice is an expression used to define ice formed outside the confines of cellular structures, wherein the perimeter of each cellular structure is defined by a cell wall. It therefore follows that intra-cellular ice refers to ice formed within the confines of said cellular structures i.e. within the confines of a cell wall.

Core ice content and the proportion thereof that is intra-cellular or extra-cellular in its formation is determined by the following method using low temperature scanning electron microscopy.

Vegetable samples sealed in polythene bags and having been stored at -80 °C were kept cold during analysis by transferring them to the Scanning electron microscopy laboratory in an insulated box containing carbon dioxide. 5mm x 5mm x 10mm sub-samples were cut from the chosen vegetable using a liquid nitrogen pre-cooled scalpel blade wherein cutting was carried out on an aluminium plate sitting on a bed of solid carbon dioxide to maintain sample temperature.

These sub-samples were mounted on to a 7mm conical depression in a 10mm diameter aluminium scanning electron microscope stub using Tissue-Tek compound (available from Sakura and comprising <11% polvinyl alcohol, <5% carbowax and at least 85% non-reactive ingredients) at the point of freezing and immediately plunged in to nitrogen slush. The stub and sub-sample was mounted on a holder and transferred to an Oxford Instruments CP2000 low temperature preparation chamber pumped with an Edwards 306 vacuum station (5 x 10⁻⁷ Torr) via an airlock. The sample was allowed to warm to -95 °C and then fractured using the point of a scalpel blade. After etching the ice for 5 minutes the sample was cooled to - 110 °C and coated with Gold/ Palladium (6mA, 6 x 10-1 mBar Argon, 20 seconds). The vacuum was allowed to recover to 5 x 10⁻⁷ Torr and the sample transferred to a Cressington Instruments cold stage in a JEOL 6301F Low Temperature Field Emission Scanning Electron Microscope using an airlock transfer device.

Samples were examined at -150 °C and ice was identified as etched depressions in the fracture surface topography. Images of the intra and extracellular ice were recorded digitally at x 100 and these images then quantified using a Zeiss (Imaging Associates) KS 400 Image Analysis system. Intracellular and extracellular ice content for the core refers to a % of the total ice observed in an image as being located within and outside the cell walls respectively.

The heat treatment step disclosed in European Patent Application No. 02251681 is said to be sufficient to destroy the cell membranes within the vegetable material and by so doing provides a uniform solute concentration across the tissues as free diffusion equilibrates solute levels. This is a necessary precursor to subsequent cooling steps in the process as any variation in solute concentration will give rise to relative variation in the temperature at which freezing will occur and thereby reduce the ability to achieve effective under-cooling.

It is stated the heat treatment of vegetables can also perform a number of other functions by providing pasteurisation of the vegetable material and deactivation of enzymes that accelerate vegetable spoilage such as lipoxygenases.

Preferably heat treatment is undertaken by blanching as this results in the destruction of cell membranes and the inactivation of some or all of the endogenous enzymes present.

It has now been found that if the heat treatment step is replaced by the firming treatment there is a significant improvement in the cooked texture of the vegetables compared to vegetables subjected to conventional commercial freezing methods.

### Summary of the Invention

Accordingly, there is provided a process for the production of a frozen vegetable or part thereof, wherein said process comprises the steps:
(i) subjecting a vegetable or part thereof to a firming treatment selected from:
   a) immersing the vegetable or part thereof in a solution of a calcium salt.
   b) heating the vegetable or part thereof to a temperature in the range 50 to 70°C, and
   c) a combination of a) and b);
(ii) under-cooling to a core temperature of less than or equal to -5°C;
(iii)reducing the temperature to less than or equal to -18°C.

The process of the present invention provides high quality frozen vegetables to the consumer, and more particularly provides frozen vegetables which, when thawed, give rise to a product texture and appearance which closely resembles that of fresh vegetables.

The addition of calcium to vegetables is known to limit the softening that vegetables undergo on subsequent higher temperature heating, such as canning or cooking. However, the quality benefits of the calcium addition prior to conventional freezing is somewhat limited. Surprisingly the combination of calcium addition and the controlled freezing regime according to the invention provides a significant improvement.

Pectin is a key component of the cell walls of vegetables and fruits and exists in the form of a gel network. The pectin in the middle lamellae between the primary cell walls of adjacent cells essentially acts as an adhesive between the cells, whilst the pectin matrix within the primary cell wall itself is believed to control the porosity. Enzymes present within the tissue can act on the pectin causing it to change its structure and properties. For example, pectin methyl esterase can de-esterify pectin. The presence or addition of calcium can then lead to cross-links being formed between pectin molecules, which can strengthen the pectin network. This change in the structure and properties of the pectin gel can produce different tissue properties, for example it reduces the softening of the tissue on heating, by limiting the loss in cell adhesion.

Suitable calcium salts include calcium sulphate, calcium chloride, calcium citrate, monocalcium phosphate and mixtures thereof. The salts are employed in aqueous solution generally at a concentration of from 0.1 to 10% calcium e.g. 1% calcium. The vegetables or vegetable portions are immersed in the solution, generally for a period of from 2 to 30 minutes e.g. about 15 minutes.

Low temperature firming treatment comprising heating to a temperature in the range 50 to 70°C is known to increase the firmness retention in vegetables on subsequent high temperature treatments such as cooking. It is known that pectin methyl esterase activity is increased by such a heating stage and mediation of firming due to pectin demethylation appears to explain part of the observed increased firmness retention. The quality benefits of low temperature firming and conventional freezing are limited. However, the combination of low temperature firming and the controlled freezing regime according to the invention provides a significant improvement. The vegetables are heated to a temperature in the range 50 to 70°C for a period of from 5 to 30 minutes, generally about 15 minutes.

The vegetables may be subjected to both the calcium and low temperature firming treatments in either order and simultaneously e.g. by immersing in calcium solution at ambient followed by immersing in calcium solution at 65°C and optionally immersing again in calcium solution at ambient temperature.

The controlled freezing regime comprises undercooling to a maximum core temperature of less than or equal to -5°C and reducing the core temperature to less than or equal to - 18°C.

Under-cooling 'the core' of the vegetable or part thereof to a maximum temperature of less than or equal to -5°C ensures that enough heat has been removed from the material to allow rapid and uniform ice formation in the freezing step (iii) and thereby provide a significant reduction in extracellular ice formation. Preferably the vegetable or part thereof is under-cooled to a temperature from -5 to -15°C, most preferably from -7 to -12°C. It has been shown that merely reducing the core to -1 or -2°C without further under-cooling is not sufficient for the rapid initiation of freezing needed for the desired reduction in extracellular ice and consequent product benefit.

In order to under-cool effectively, without initiating ice crystal formation, the temperature difference between the centre of the core and the surface of the vegetable or part thereof must be kept to a minimum.

It has been shown that temperature differences between core and surface at the point of initiation of ice formation can vary significantly with conventional approaches to freezing. With the conventional blast freezing, when the surface of the vegetable material reaches 0°C and ice formation starts, the core is much warmer and the initiation of ice formation in this region starts much later.

Conventional wisdom accepts that the quicker the temperature drops during freezing, the more rapidly freezing occurs and the more favourable the vegetable properties achieved. Commercial preparation of frozen vegetables has therefore sought to speed up the cooling rates of commercial freezing equipment. It is counter intuitive and therefore surprising to now find that where the rate of cooling is slowed to achieve a defined level of under-cooling within the vegetable core initiation of freezing can be induced throughout a product almost instantaneously.

In accordance with the present invention there is provided a process therein the rate of cooling is slowed sufficiently to achieve only a small temperature difference between core and surface and thereby induce under-cooling at the core of the vegetable material to a maximum temperature of less than or equal to -5°C. Ice formation with further temperature reduction can then occur throughout the vegetable material at approximately the same time. This has been found to result in a higher proportion of ice crystal formation within the cell structures defined by the cell walls i.e. intracellular ice and more favourable vegetable properties when consumed.

The temperature difference between the core and surface, and also within the core itself is dependent on the rate of cooling of the vegetable material. Rate of cooling is in turn dependant on the size of the vegetable material to be frozen and the surface area that it exhibits. It is believed to be within the capability of the person skilled in the art to decide on an appropriate cooling rate to achieve under-cooling to maximum core temperature of less than or equal to -5°C for a vegetable of a particular size and surface area.

Sensory analysis has confirmed that both the appearance and the texture of vegetables prepared according to the present invention show improvement over the conventional freezing methods known in the art and the results obtained closely resemble those for fresh unfrozen vegetables. In particular the firmness of vegetables according to the invention are significantly improved over frozen vegetables known in the art.

To ensure effective under-cooling it is preferred that the cooling rate utilised for the process of the invention maintains maximum and minimum temperatures between the surface and the core within 6°C of each other, preferably less than or equal to 3°C, most preferably less than 1.5°C of each other e.g. two temperature probes are inserted into the vegetable e.g. a potato which is being cooled according to the invention, the first at 10mm from the surface of a potato tuber and the second in the centre of the tuber; when the first probe detects a temperature of 0°C the second should read less than or equal to +6°C, preferably less than or equal to +3°C, most preferably less than +1.5°C.

Preferably the vegetable material will be cooled in a blast freezer wherein the freezer set-point is progressively reduced according to the following regime:
55-65 minutes at 0°C
25-35 minutes at -5°C
10-20 minutes at -10°C
10-20 minutes at -12.5°C
70+ minutes at -30°C

Most preferably the vegetable material will be frozen in a blast freezer wherein the freezer set-point is reduced according to the following regime:
60-70 minutes at -12°C downwards airflow about 1 m/s
25-35 minutes at -30°C downwards airflow about 4.5 m/s

The temperature at which initiation of freezing occurs in step (iii)will depend on the nature of the vegetable that is being subjected to this freezing process, the rate at which cooling continues below -5°C as well as the presence or absence of nucleating agents. Initiation of freezing may occur at any point when the temperature within the core is at a maximum of less than -5°C. Typically initiation of freezing will occur when the temperature within the core is at a maximum temperature of from -7°C to -12°C.

In one embodiment of the process at least 40% of ice formation within the core of said vegetable or part thereof in step (iii) occurs within a plurality of cellular structures, wherein the perimeter of each cellular structure is defined by a cell wall. Preferably at least 60 % of said ice formation occurs within said plurality of cellular structures, more preferably 80%. Most preferably 90% of ice formation at the core of said vegetable or part thereof occurs within said plurality of cellular structures.

In a vegetable prepared according to the present invention it is preferred that at least 60% of said ice formation occurs within said plurality of cellular structures, more preferably 80%. In a most preferred embodiment 90% of ice formation at the core of said vegetable or part thereof occurs within said plurality of cellular structures as these vegetables most closely resemble the appearance and texture of fresh vegetables.

The effect of extra-cellular ice formation on the cellular structure of the vegetable material has been demonstrated, wherein the cavitation in thawed vegetables caused by extra-cellular ice growth has been quantitatively evaluated.

Measurements have been carried out to demonstrate the differences in the disruption of the cellular structures in thawed vegetables between conventional freezing and freezing by a process of the invention.

Fixation Method: The tissue pieces were received already thawed. They were transferred to fixative, formol-acetic alcohol (FAA) at room temperature and left to fix for not less than 72 hours.

Embedding & Sectioning: After fixation, the tissue pieces were dehydrated and embedded in paraffin wax. They were then sectioned to a nominal thickness of 5µm, and mounted on glass slides.

Sections were cut through the tissue pieces which had been subjected to the different freezing treatments. Three images were selected from each section, two from opposite sides of the tissue section (avoiding tissue very close to the edge of the section) and one image from near the middle. Care was taken to ensure that there was no overlap between the fields.
For image enhancement the images were first converted to B/W (18-Bit) format and image contrast was greatly increased by carrying out a 100 pixel value downfield shift of the entire image, followed by re-ranging it back to its full dynamic range (pixel value range 0 - 255). This left the cell walls a very dark grey and remainder of the image a very light grey.

The ice cavities were identified by eye from their morphology. Using the 'magic wand' range selector, set to a tolerance of ±15, with the contiguity control switched on, the cavities were selected manually and filled with white (pixel value = 255). The remainder of the image was rendered black (pixel value = 0).

Measurements were done on a Kontron KS300 image analyser. The total number of pixels in the ice cavities were counted (measured as a filled area - i.e. treating any small inclusions within the cavities as if they were not there), added together and expressed as a percentage of the pixels in the entire image.

For the purpose of the present invention a vegetable or part thereof may be selected from the group comprising potato, swede, turnip, pumpkin, onion, broccoli, tomato, zucchini, aubergine, water chestnut, pepper, mushroom, peas, carrot, spinach, sugar-snap peas, green bean and mange-tout. Most preferably said vegetable or part thereof is tomato.

Vegetable or parts thereof according to the present invention can be readily used in a variety of commercial catering or domestic frozen food products. In particular vegetables of the present invention are ideally suited to frozen ready prepared meals where their superior texture considerably improves the product quality. Therefore a further aspect of the invention relates to the use of a vegetable of part thereof as described above in a frozen meal.

### Description of the Drawings

Figures 1 to 3 represent plots of force (N) against displacement (mm) obtained from compressive mechanical tests conducted on samples from Examples 1 to 3 respectively, and
Figures 4 to 7 represent low temperature scanning electron microscope images conducted on samples from Example 3.
Figures 8 and 9 represent plots of force (N) against displacement (mm) obtained from compressive mechanical tests conducted on samples from Examples 4 and 5 respectively.

The invention will be illustrated by the following Examples in which the following techniques were employed:

### Vegetable Freezing Method (Controlled Cooling)

The freezing method used a Montford Environment Test Chamber. This programmable piece of apparatus is capable of producing very finely controlled temperature gradients in a reproducible manner. The programme used gives rise to a linear gradient down from +10° to -30°C over 16 hours. The vegetables were transferred to the chamber and then frozen using the 16 hour gradient programme.

### Compressive Mechanical Tests of Tomatoes

The mechanical plots show typical compressive mechanical tests on pieces of tomato cut from the outer pericarp of several fruits. The pieces were either frozen raw or initially heated and/or immersed in calcium solution as described by the invention, prior to being frozen by the process of the invention or by conventional blast freezing. After freezing, the pieces were thawed by immersion in ambient water. For each regime, ten pieces were tested and a typical force-displacement plot was chosen to represent each regime.

For the purposes of the mechanical tests, 1cm diameter cylinders of tissue were cut from the pericarp of the tomato using a corkborer. These pieces were processed as described previously. The tissue cylinder was then compressed with a flat plate to about 70-80% strain at a crosshead speed of 2400mm/min using a Dartec Series HC10 Servo-Hydraulic Testing System.

### Tomato Cooking

Cooking was conducted on tomato portions (whole tomatoes cut into 4 to 6 portions while still frozen). The portions were cooked by frying in oil until they reached a temperature of at least 70°C.

### Example 1

### The following tests were conducted:

### a) Calcium firming and controlled cooling (Ca/CC)

Tomato pieces were immersed in 1% calcium chloride solution for 15 mins followed by freezing by Controlled Cooling(CC). Tomato pieces were then cooked from frozen. Intact pieces apparent with skin still attached, minimal fluid released and a firm texture in-mouth and to fork.

### b) No firming treatment and controlled cooling (Raw/CC)

Raw tomato pieces were frozen by controlled cooling. Tomato pieces were cooked from frozen. The cooked tomato pieces were very soft, wet, lots of fluid lost and skin coming away from flesh.

### c) No firming treatment and conventionally frozen (Raw/blast)

Raw tomato pieces were frozen in a conventional blast freezer set to -30°C throughout the freezing process.

Tomato pieces were cooked from frozen. The cooked tomato pieces were similar to those of test b) (Raw/CC).

### d) Calcium firming and conventionally frozen (Ca/blast)

Raw tomato pieces were immersed in 1% calcium chloride solution for 15 minutes followed by freezing in a conventional blast freezer set to -30°C throughout the freezing process.

Tomato pieces were cooked from frozen. The cooked tomato pieces were less intact than those from test a) and disintegrated with a fork.

### Compressive Mechanical Tests

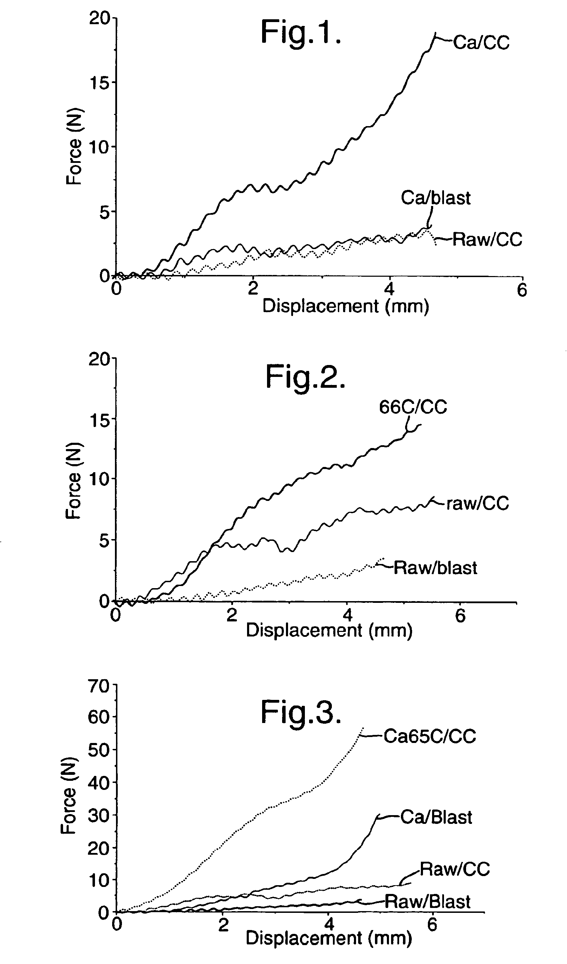

Compressive mechanical tests were conducted on thawed samples from tests a) (Ca/CC), b) (Raw/CC) and d) (Ca/blast). The results are reported in Figure 1.
It will be seem from Figure 1 that the strength (max force prior to failure) is greater for the thawed samples treated according to the invention (Ca/CC) than samples treated by Raw/CC or Ca/blast. The initial gradient (stiffness) and area under curve prior to failure (energy to failure) are also greater. These mechanical parameters are known to relate to the perceived in-mouth texture (firmness) of the tissue.

### Example 2

### The following tests were conducted:

### a) Heating at 65°C and controlled cooling (65C/CC)

Tomato pieces were immersed in water at 65°C for 15 minutes followed by freezing by controlled cooling. Tomato pieces were cooked from frozen.

### b) No firming treatment and controlled cooling (Raw/CC)

Test b) as in Example 1.

### c) No firming treatment and conventionally frozen (Raw/blast)

Test c) as in Example 1.

### d) Heating at 65°C and conventionally frozen (65C/blast)

Tomato pieces were immersed in water at 65°C for 15 minutes followed by freezing in a conventional blast freezer set to - 30°C throughout the freezing process.

Tomato pieces were cooked from frozen. The results of the tests a) to d) are summarised in the following Table.

| | |
|---|---|
| TEST | RESULT AFTER COOKING |
| c) Raw/blast | V. mushy/difficult to cut; Pericarp to paste |
| d) 65C/blast | Less mushy, but soft, watery |
| b) Raw/CC | Firmer, more structure in tomato; easier to cut |
| a) 65C/CC | Firmer to cut |

### Compressive Mechanical Tests

Compressive mechanical tests were conducted on thawed samples from tests a), b) and c). The results are reported in Figure 2.

It will be observed from Figure 2 that the strength of the samples treated in accordance with the invention (65C/CC) is superior to the other samples.

### Example 3

### The following tests were conducted:

### a) Calcium and low temperature firming and controlled cooling (Ca 65C/CC)

Tomato pieces were immersed in 1% calcium chloride solution at ambient temperature for 5 minutes, followed by immersion in 1% calcium chloride solution at 65°C for 5 minutes followed by immersion in 1% calcium chloride solution at ambient temperature for 5 minutes.
Thereafter the tomato pieces were frozen by controlled cooling.

Tests b), and c) were repeated as in Example 2. Test d) was the same as Test a) above, except that blast freezing was used instead of controlled cooling.

### Compressive Mechanical Tests

Compressive mechanical tests were conducted on thawed samples from test a) and compared to thawed samples from b) untreated/ controlled cooled (Raw/CC), c) untreated/conventionally frozen (Raw/blast) and d) calcium firming/conventionally frozen (Ca/blast). The results are reported in Figure 3.

It will be observed from Figure 3 that the strength of the samples treated in accordance with the invention (Ca65C/CC) is superior to the other samples. The initial gradient (stiffness) and area under the curve prior to failure (energy to failure) are also greater.

### Preparation of frozen tomato for quantitative evaluation of intra-cellular and extra-cellular ice content using low temperature scanning electron microscopy (LTSEM)

Frozen tomato samples in sealed polythene bags that had been stored at -80 °C were kept cold by transferring them to the Scanning electron microscopy laboratory in an insulated box containing carbon dioxide.

Approximately 5mm x 5mm x 10mm sub-samples were cut 10mm from the outer edge of each sample using a liquid nitrogen pre-cooled scalpel blade. Cutting was carried out on an Aluminium plate sitting on a bed of solid carbon dioxide to maintain sample temperature. Sub-samples were mounted on to a 7mm conical depression in a 10mm diameter Aluminium scanning electron microscope stub using TissueTek compound at the point of freezing and immediately plunged in to Nitrogen slush. The stub + sample was mounted on to a holder and transferred to an Oxford Instruments CP2000 low temperature preparation chamber pumped with an Edwards 306 vacuum station (5 x 10⁻⁷ Torr) via an airlock. The sample was allowed to warm to -95 °C and fractured using the point of a scalpel blade. After etching the ice for 5 minutes the sample was cooled to - 110 °C and coated with Gold/ Palladium (6mA, 6 x 10-1 mBar Argon, 20 seconds). The vacuum was allowed to recover to 5 x 10⁻⁷ Torr and the sample transferred to a Cressington Instruments cold stage in a JEOL 6301F Low Temperature Field Emission Scanning Electron Microscope using an airlock transfer device.

Samples were examined at -150 °C and ice was identified as etched depressions in the fracture surface topography. Representative images of the intra and extracellular ice were recorded digitally at x 100 and these images then quantified using a Zeiss (Imaging Associates) KS 400 Image Analysis system.

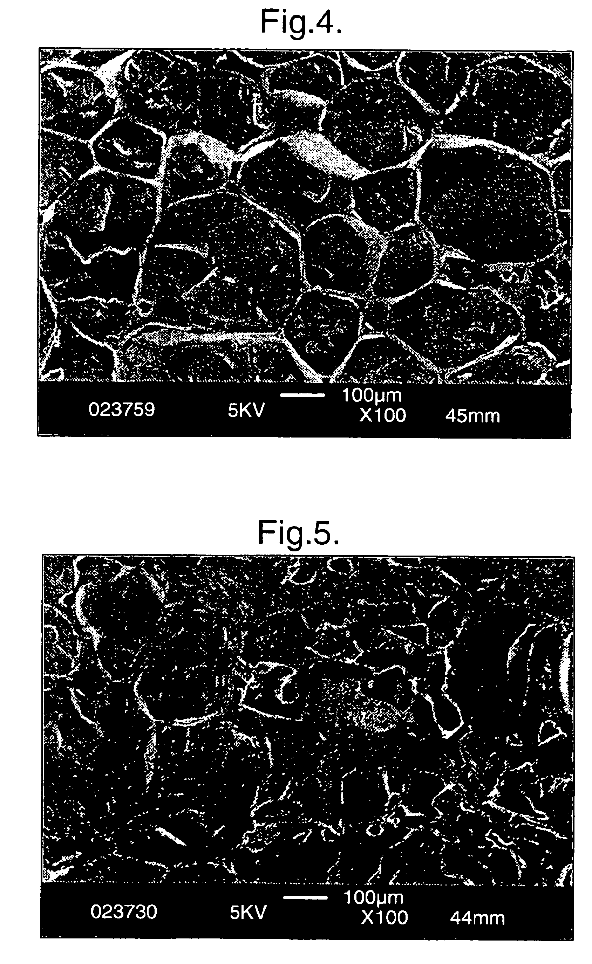

Figures 4 to 7 are LTSEM images for tomato samples subjected to Ca65C/CC, Raw/CC, Raw/blast and Raw/blast respectively.

Figure 4 shows ice crystals within the cells and intact tissue structure. The tissue is firm when thawed.

Figure 5 shows large ice crystals, some in cells with some cells intact and damaged tissue.

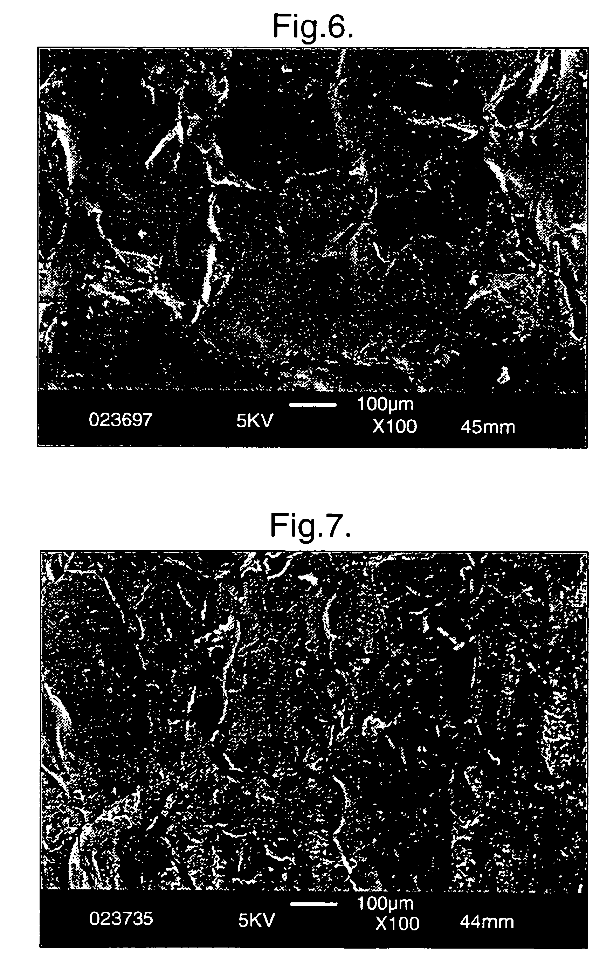

Figure 6 shows large ice crystals with very damaged tissue structure. The tissue is soft and watery when thawed.

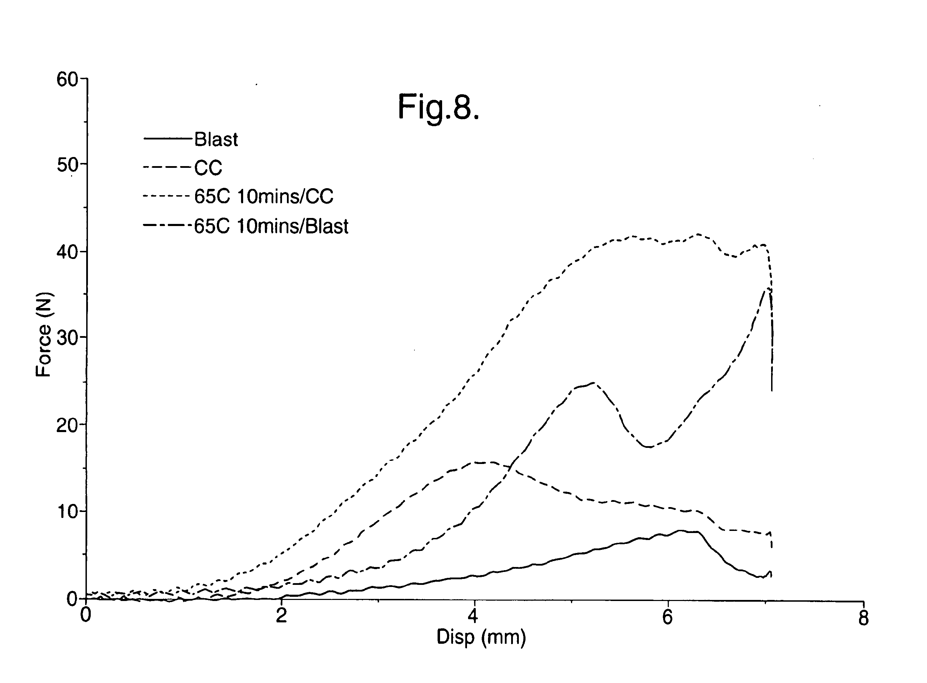

Figure 7 also shows large ice crystals and very damaged tissue.

### Example 4

Whole new harvest potatoes (var Charlotte) were treated and analysed as follows:

Whole tubers (30 to 40g size range) were subjected to a firming treatment by immersion in water heated to 65°C for 10 minutes and then allowed to air cool for 10 minutes at room temperature. The potatoes were then blanched by immersion for 12 minutes in boiling water. Other potatoes from the same batch that had not been subjected to firming at 65°C were also blanched in boiling water for 12 minutes.

Firmed and non firmed potatoes were then frozen either conventionally in blast freezer or by controlled cooling. After freezing the tubers were thawed by immersion in water at ambient temperature. Samples from each processing regime were cut from the parenchyma region of different tubers, pieces were cut to 1cm cubes using a scalpel blade. The pieces were compressed with a flat plate to 70 to 80% strain at a cross head speed of 2400mm/min using a Dartec Series HC10 Servo-Hydraulic Testing System. For each process six pieces from different tubers were tested. A typical force against displacement plot is shown in Figure 8.

It can be seen from Figure 8 that the stiffness (initial gradient), strength (maximum force required prior to failure) and area under the curve prior to failure are all greater for the potato pieces that have been subjected to a firming treatment and then frozen by the controlled cooling process. These mechanical parameters are accepted to relate to the textural perception of food stuffs in-mouth and clearly show a greater retention of the typical attributes of high quality vegetables.

### Example 5

Frozen whole potatoes produced by each of the four regimes described in Example 4 were added to a pan of boiling water for 17 minutes until judged to be fully cooked. Each of the samples was then served in a randomised order for tasting and assessed against a series of appearance and textural attributes.

The potatoes that had been frozen by controlled cooling were more intact, showed no skin splitting and were firmer to the cut and taste than the tubers that had been conventionally frozen with or without a firming treatment. However, the potatoes that had been subjected to a firming treatment prior to being frozen by the controlled cooling process showed an even greater improvement in texture with a firm, waxy texture very close to that of a fresh, non-frozen high quality potato.

### Example 6

Carrot roots were cut into pieces of approximately 50g and treated as follows:

Carrot pieces were subjected to a firming treatment by immersion for 20 minutes in water heated to 65°C and then allowed to air cool for 10 minutes at room temperature. The carrot pieces were then blanched by immersion for 8 minutes in boiling water. Other carrot pieces from the same batch that had not been subjected to firming at 65°C were also blanched in boiling water for 8 minutes.

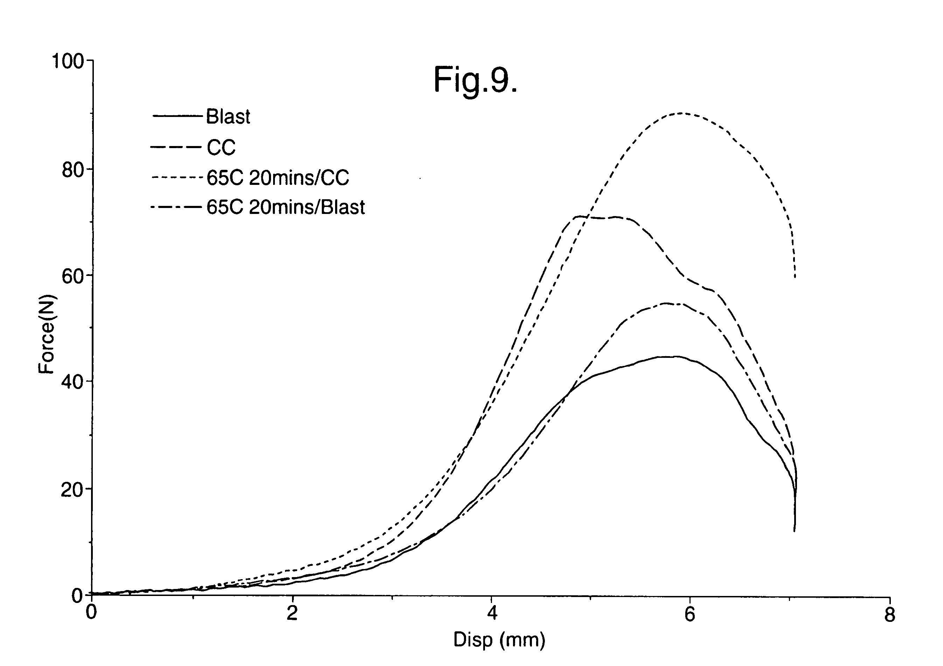

Firmed and non firmed carrots were then frozen, either conventionally in blast freezer, or by controlled cooling. After freeing the pieces were thawed by immersion in water at ambient temperature. Samples from each processing regime were cut to 1cm cubes from the pith region of different root pieces using a scalpel blade. The pieces were compressed with a flat plate to 70 to 80% strain at a cross head speed of 2400mm/min using a Dartec Series HC10 Servo-Hydraulic Testing System. For each process six pieces from different roots were tested. A typical force against displacement plot is shown in Figure 9.

It can be seen from Figure 9 that the strength (maximum force required prior to failure) and the area under the curve prior to failure are all greater for the carrot pieces that have been subjected to a firming treatment and then frozen by controlled cooling. These mechanical parameters are accepted to relate to the textural perception of food stuffs in-mouth and clearly show a greater retention of the typical attributes of high quality vegetables.

### Example 7

Sensory assessment of frozen tomato pieces.

This Example compares the sensory assessment of meals prepared from frozen tomato pieces which were frozen by conventional blast freezing or controlled cooling with and without a heat firming treatment.

Frozen salad tomato pieces were added to a frozen meal which was stir fried for 13 min.

Meal appearance was evaluated by a panel of 16 trained sensory assessors. The meal was presented on white china plates. Each sample contained 8 pieces of tomato amongst rice. Total meal weight was 200g.

The following attributes were evaluated as follows:

### Impression of whole pieces

The amount of large, whole pieces of tomato that appear to be present across the whole sample on the plate.

### Structural strength

Whether the tomato pieces appear to be self-supporting or collapse.

### Intactness of pieces

The degree to which the individual tomato pieces in the sample are intact or broken down.

The following contains the adjusted mean scores for each of the four samples in terms of tomato appearance. (Values followed by the same letter were not significantly different (p = 0.05)).

| | | | | |
|---|---|---|---|---|
| Attribute | Raw blast | Heat Treat blast | Raw CC | Heat Treat CC |
| Impression whole pieces | 2.99a | 3.22ab | 3.72b | 4.46c |
| Structural strength | 2.51ab | 2.14a | 2.92b | 3.5c |
| Intactness of pieces | 2.49a | 2.68ab | 3.08bc | 3.5c |

The data shows that the heat treated controlled cooled sample gave the impression of having significantly more whole tomato pieces with more structural strength than any of the other samples.

The tomato pieces in the heat treated controlled cooled sample were also judged to be significantly more intact than either of the blast frozen samples. The tomato pieces in the heat treated controlled cooled sample were also ranked more intact than no heat treated controlled cooled sample but the difference was not significant (p = 0.05).

## Claims

1. A process for the production of a frozen vegetable or part thereof, wherein said process comprises the steps of:
(i) subjecting a vegetable or part thereof to a firming treatment selected from:
a) immersing the vegetable or part thereof in a solution of a calcium salt.
b) heating the vegetable or part thereof to a temperature in the range 50 to 70°C, and
c) a combination of a) and b);
(ii) under-cooling to a core temperature of less than or equal to -5°C;
(iii)reducing the temperature to less than or equal to -18°C.

2. A process as claimed in claim 1 in which the calcium salt is selected from calcium chloride, calcium sulphate, calcium citrate, calcium monophospate and mixtures thereof.

3. A process as claimed in claim 1 or claim 2 in which the solution of calcium salt comprised from 0.1 to 10% calcium.

4. A process as claimed in claim 3 in which the solution of calcium salt comprises 1% calcium.

5. A process as claimed in any preceding claim in which the vegetable or part thereof is immersed in the solution of calcium salt for a period of from 2 to 30 minutes.

6. A process as claimed in any preceding claim in which the vegetable or part thereof is heated to a temperature of from 50 to 70°C for a period of from 2 to 30 minutes.

7. A process as claimed in claim 6 in which the temperature is 65°C.

8. A process as claimed in any preceding claim in which the firming treatment comprises immersing the vegetable or part thereof in a solution of calcium salt at ambient temperature and immersing the vegetable or part thereof in an aqueous solution at a temperature of from 50 to 70°C (with or without calcium salt being present) in either order.

9. A process as claimed in claim 8 in which the firming treatment comprises the steps of:
immersing the vegetable or part thereof in a solution of calcium salt at ambient temperature for a period of from 2 to 30 minutes; thereafter
immersing the vegetable or part thereof in a solution of calcium salt at a temperature of from 50 to 70°C for a period of from 2 to 30 minutes, and
optionally immersing the vegetable as part thereof in a solution of calcium salt for a period of from 2 to 30 minutes.

10. A process according to any preceding claim wherein at least 40% of ice formation within the core of said vegetable or part thereof in step (iii) occurs within a plurality of cellular structures, wherein the perimeter of each cellular structure is defined by a cell wall.

11. A process according to any preceding claim wherein said vegetable or part thereof is selected from the group comprising potato, swede, turnip, pumpkin, onion, broccoli, tomato, zucchini, aubergine, water chestnut, pepper, mushroom, peas, sugar-snap peas, spinach, green beans, carrot and mange tout.

12. A process according to any preceding claim wherein said vegetable or part thereof is tomato.

13. A process as claimed in any one of claims 1 to 11 wherein said vegetable or part thereof is potato or carrot.

14. A frozen vegetable obtainable by a process as claimed in any preceding claim.

15. A frozen meal comprising a vegetable or part thereof as claimed in claim 14.

16. Use of a vegetable or part thereof as claimed in claim 14 in a frozen meal.

## Patentansprüche

1. Verfahren zur Herstellung eines gefrorenen Gemüses oder eines Teils davon, wobei das Verfahren die Schritte umfasst:
(i) Unterziehen eines Gemüses oder eines Teils davon einer Festigungsbehandlung ausgewählt aus:
a) Eintauchen des Gemüses oder des Teils davon in eine Lösung eines Calciumsalzes;
b) Erhitzen des Gemüses oder des Teils davon auf eine Temperatur im Bereich von 50 bis 70°C, und
c) einer Kombination von a) und b);
(ii) Unterkühlen auf eine Kern-Temperatur von weniger als oder gleich -5°C;
(iii) Reduzieren der Temperatur auf weniger als oder gleich -18°C.

2. Verfahren nach Anspruch 1, worin das Calciumsalz ausgewählt ist aus Calciumchlorid, Calciumsulfat, Calciumcitrat, Calciummonophosphat und Mischungen davon.

3. Verfahren nach Anspruch 1 oder 2, worin die Lösung des Calciumsalzes 0,1 bis 10% Calcium umfasst.

4. Verfahren nach Anspruch 3, worin die Lösung des Calciumsalzes 1% Calcium umfasst.

5. Verfahren nach einem vorhergehenden Anspruch, worin das Gemüse oder der Teil davon in der Lösung des Calciumsalzes für eine Zeitdauer von 2 bis 30 Minuten eingetaucht wird.

6. Verfahren nach einem vorhergehenden Anspruch, worin das Gemüse oder der Teil davon auf eine Temperatur von 50 bis 70°C für eine Zeitdauer von 2 bis 30 Minuten erhitzt wird.

7. Verfahren nach Anspruch 6, worin die Temperatur 65°C ist.

8. Verfahren nach einem vorhergehenden Anspruch, worin die Festigungsbehandlung Eintauchen des Gemüses oder des Teils davon in eine Lösung aus Calciumsalz bei Umgebungstemperatur und Eintauchen des Gemüses oder des Teils davon in eine wässerige Lösung bei einer Temperatur von 50 bis 70°C (mit oder ohne Anwesenheit von Calciumsalz) in jeder beliebigen Reihenfolge umfasst.

9. Verfahren nach Anspruch 8, worin die Festigungsbehandlung die Schritte umfasst:
Eintauchen des Gemüses oder des Teils davon in eine Lösung von Calciumsalz bei Umgebungstemperatur für eine Zeitdauer von 2 bis 30 Minuten; danach
Eintauchen des Gemüses oder des Teils davon in eine Lösung von Calciumsalz bei einer Temperatur von 50 bis 70°C für eine Zeitdauer von 2 bis 30 Minuten, und
gegebenenfalls Eintauchen des Gemüses oder des Teils davon in eine Lösung von Calciumsalz für eine Zeitdauer von 2 bis 30 Minuten.

10. Verfahren nach einem vorhergehenden Anspruch, worin mindestens 40% der Eisbildung innerhalb des Kerns des Gemüses oder des Teils davon in Schritt (iii) innerhalb einer Mehrzahl von Zellstrukturen auftritt, wobei der Umfang jeder Zellstruktur von einer Zellwand begrenzt ist.

11. Verfahren nach einem vorhergehenden Anspruch, worin das Gemüse oder der Teil davon ausgewählt ist aus der Gruppe umfassend Kartoffel, Kohlrübe, Rübe, Kürbis, Zwiebel, Broccoli, Tomate, Zucchini, Aubergine, Wassernuss, Paprika, Pilze, Erbsen, Knackerbsen, Spinat, Fisolen, Karotte und Zuckerschote.

12. Verfahren nach einem vorhergehenden Anspruch, worin das Gemüse oder der Teil davon Tomate ist.

13. Verfahren nach einem der Ansprüche 1 bis 11, wobei das Gemüse oder der Teil davon Kartoffel oder Karotte ist.

14. Gefrorenes Gemüse, erhältlich mit einem Verfahren, wie in einem vorhergehenden Anspruch beansprucht.

15. Gefrorene Mahlzeit, umfassend ein Gemüse oder einen Teil davon, wie in Anspruch 14 beansprucht.

16. Verwendung eines Gemüses oder eines Teils davon, wie in Anspruch 14 beansprucht, in einer gefrorenen Mahlzeit.

## Revendications

1. Procédé pour la production d'un légume congelé ou d'une partie de celui-ci, dans lequel ledit procédé comprend les étapes consistant à :
(i) soumettre un légume ou une partie de celui-ci à un traitement de raffermissement choisi parmi :
(a) une immersion du légume ou d'une partie de celui-ci dans une solution d'un sel de calcium :
(b) un chauffage du légume ou d'une partie de celui-ci à une température comprise dans la gamme de 50 à 70 °C, et
(c) une combinaison de a) et b);
(ii) effectuer une surfusion jusqu'à une température de coeur inférieure ou égale à 5 °C ;
(iii) réduire la température à une température inférieure ou égale à -18 °C.

2. Procédé selon la revendication 1, dans lequel le sel de calcium est choisi parmi le chlorure de calcium, le sulfate de calcium, le citrate de calcium, le monophosphate de calcium et des mélanges de ceux-ci.

3. Procédé selon la revendication 1 ou 2, dans lequel la solution de sel de calcium est composée de 0,1 à 10 % de calcium.

4. Procédé selon la revendication 3 dans lequel la solution de sel de calcium comprend 1 % de calcium.

5. Procédé selon l'une quelconque des revendications précédentes, dans lequel le légume ou une partie de celui-ci est immergé de la solution de sel de calcium pendant une période de 2 à 30 minutes.

6. Procédé selon l'une quelconque des revendications précédentes, dans lequel le légume ou une partie de celui-ci est chauffé à une température comprise entre 50 et 70 °C pendant une période de 2 à 30 minutes.

7. Procédé selon la revendication 6, dans lequel la température est de 65 °C.

8. Procédé selon l'une quelconque des revendications précédentes, dans lequel le traitement de raffermissement comprend l'immersion du légume ou d'une partie de celui-ci dans une solution de sel de calcium à température ambiante et l'immersion du légume ou d'une partie de celui-ci dans une solution aqueuse à une température comprise entre 50 et 70 °C (en présence ou en l'absence de sel de calcium) dans un ordre quelconque.

9. Procédé selon la revendication 8, dans lequel le traitement de raffermissement comprend les étapes consistant à :
immerger le légume ou une partie de celui-ci dans une solution de sel de calcium à température ambiante pendant une période de 2 à 30 minutes ; par la suite
immerger le légume ou une partie de celui-ci dans une solution de sel de calcium à une température comprise entre 50 et 70 °C pendant une période de 2 à 30 minutes, et
éventuellement immerger le légume ou une partie de celui-ci dans une solution de sel de calcium pendant une période de 2 à 30 minutes.

10. Procédé selon l'une quelconque des revendications précédentes, dans lequel au moins 40 % de la formation de glace au centre dudit légume ou d'une partie de celui-ci dans l'étape (iii) intervient dans une pluralité de structure cellulaire, dans lequel le périmètre de chaque structure cellulaire est défini par une paroi cellulaire.

11. Procédé selon l'une quelconque des revendications précédentes, dans lequel ledit légume ou partie de celui-ci est choisi parmi le groupe comprenant la pomme de terre, le choux navet, le rutabaga, la citrouille, l'oignon, le brocoli, la tomate, la courgette, l'aubergine, la châtaigne d'eau, le poivre, le champignon, les pois, les pois sugar-snap, l'épinard, le haricot vert, la carotte et les mange-tout.

12. Procédé selon l'une quelconque des revendications précédentes, dans lequel ledit légume ou partie de celui-ci est la tomate.

13. Procédé selon l'une quelconque des revendications 1 à 11, dans lequel ledit légume ou partie de celui-ci est la pomme de terre ou la carotte.

14. Légume congelé que l'on peut obtenir par un procédé selon l'une quelconque des revendications précédentes.

15. Repas congelé comprenant un légume ou une partie de celui-ci selon la revendication 14.

16. Utilisation d'un légume ou d'une partie de celui-ci selon la revendication 14 dans un repas congelé.
